(19) Europäisches Patentamt
European Patent Office
Office européen des brevets

(11) Publication number: 0 025 573
B1

(12) # EUROPEAN PATENT SPECIFICATION

(45) Date of publication of patent specification: 25.04.84

(51) Int. Cl.³: C 08 L 67/02, C 08 G 63/66

(21) Application number: 80105328.1

(22) Date of filing: 05.09.80

(54) **Modified polyalkylene terephthalate compositions and their use for the production of shaped articles.**

(30) Priority: 07.09.79 JP 115368/79

(43) Date of publication of application:
25.03.81 Bulletin 81/12

(45) Publication of the grant of the patent:
25.04.84 Bulletin 84/17

(84) Designated Contracting States:
BE DE FR GB IT NL SE

(56) References cited:
US - A - 3 682 846
US - A - 4 211 859

(73) Proprietor: KANEGAFUCHI KAGAKU KOGYO KABUSHIKI KAISHA
2-4 Nakanoshima 3-chome
Kita-ku Osaka-shi (JP)

(72) Inventor: Tonoki, Satoshi
6-433, 6-chome Maikodai Tarumi-ku
Kobe-shi Hyogo-ken (JP)
Inventor: Hirobe, Kazushi
2-7, 1-chome, Yoshida-cho Hyogo-ku
Kobe-shi Hyogo-ken (JP)
Inventor: Osawa, Tadashi
1-3, 1-chome, Yoshida-cho Hyogo-ku
Kobe-shi Hyogo-ken (JP)
Inventor: Nishigaki, Masahiko
5-1, 2-chome, Tanaka-cho Higashinada-ku
Kobe-shi Hyogo-ken (JP)

(74) Representative: Vossius Vossius Tauchner Heunemann Rauh
Siebertstrasse 4 P.O. Box 86 07 67
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 025 573 B1

Modified polyalkylene terephthalate compositions and their use for the production of shaped articles

This invention relates to modified polyalkylene terephthalate compositions, and particularly to those used for molding. More particularly, it relates to modified polyalkylene terephthalate compositions comprising a polyalkylene terephthalate copolymerized and/or mixed with a polyoxyalkylene compound having at the end of the molecule a metal salt of an organic carboxylic acid. The compositions have a very high crystallizing rate, improved moldability and workability, and excellent heat resistance and mechanical strength.

High molecular linear polyalkylene terephthalates obtained from dicarboxylic acids or their ester-forming derivatives and diols or their ester-forming derivatives have a high softening point and excellent electrical, physical and mechanical properties, as well as heat resistance, chemical resistance, and light-resistance. They are used widely in the form of fibers, films and moldings. When used for injection molding, however, such polyalkylene terephthalates are slower in their crystallization rate than similar crystalline polymers such as nylon and polyacetals, and polyethylene terephthalates, particularly, hardly crystallize at all at temperatures below 100°C. There has been a great need with regard to polyalkylene terephthalates, particularly polyethylene terephthalates, to improve their crystallization characteristics, reduce the molding cycle and widen the temperature range for the metal mold when molding.

The inventors have found that, when copolymerized and/or mixed with a polyalkylene terephthalate, a polyoxyalkylene compound having an alkali or alkaline earth metal salt of an organic carboxylic acid at the end of the molecule remarkably increases the crystallization rate of the polyalkylene terephthalate and consequently reduces the molding cycle, because it gives to the polyethylene terephthalate a high crystallization rate even when the mold temperature is reduced to below 100°C. Further, moldings of excellent heat resistance and mechanical strength are produced.

The invention, therefore, relates to modified polyalkylene terephthalate compositions comprising

(a) 100 parts by weight of a polyester consisting of at least 90 mol% of terephthalic acid and up to 10 mol% of other aromatic dicarboxylic acids having 6 to 14 carbon atoms, aliphatic dicarboxylic acids having 4 to 8 carbon atoms, alicyclic dicarboxylic acids having 8 to 12 carbon atoms or hydroxy carboxylic acids and at least 90 mol% of an alkylene glycol having 2 to 8 carbon atoms and up to 10 mol% of other aliphatic diols having 3 to 10 carbon atoms, alicyclic diols having 6 to 15 carbon atoms or aromatic diols having 6 to 12 carbon atoms, copolymerized and/or mixed with

(b) a polyoxyalkylene compound having the general formula

$$R^1\left(-(OR^2)_l-OR^3\right)_m$$

wherein $R^1$ is hydrogen or an organic group of valence m where m is an integer of 1 to 6, $R^2$ is an aliphatic hydrocarbon group having 2 to 4 carbon atoms, l is zero or a positive integer, $R^3$ is (1) a group containing an alkali metal salt of a carboxylic acid represented by the formula

$$-\overset{\overset{\displaystyle O}{\|}}{C}-X\left(-COOM\right)_n$$

in which X is an aliphatic, alicyclic or aromatic hydrocarbon residue or a halogenated derivative thereof or a mixture thereof, M is an alkali metal and n is an integer of 1 to 5, or a corresponding alkaline earth metal salt of (2) a mixture of such groups and hydrogen, in an amount such that the amount of the metal is 0.001 to 2.0 parts by weight of the polyester.

The polyalkylene terephthalate (a) used in the invention is obtained by condensation polymerization, after direct esterification or after ester interchange, of a dicarboxylic acid component comprising at least 90 mol% terephthalic acid and a diol component comprising at least 90 mol% of an alkylene glycol and having 2 to 8 carbon atoms such as ethylene glycol, propane-1,3-diol, butane-1,4-diol, pentane-1,5-diol, hexane-1,6-diol, or cyclohexane-1,4-dimethanol. From the industrial point of view, polyethylene terephthalate and polybutylene terephthalate are the most preferable. Up to 10 mol% of the dicarboxylic acid component of the polyalkylene terephthalate may be other aromatic dicarboxylic acids having 6 to 14 carbon atoms, aliphatic dicarboxylic acids having 4 to 8 carbon atoms, or alicyclic dicarboxylic acids having 8 to 12 carbon atoms. Such dicarboxylic acids include phthalic acid, isophthalic acid, 2,6-naphthalenedicarboxylic acid, 4,4′-diphenyldicarboxylic acid, adipic acid, sebacic acid and cyclohexanedicarboxylic acid. Up to 10 mol% of the diol component may be other aliphatic diols having 3 to 10 carbon atoms, alicyclic diols having 6 to 15 carbon atoms, or aromatic diols having 6 to 12 carbon atoms. Such diols include 2,2-dimethylpropane-1,3-diol, 2,2-bis(4′-hydroxycyclohexyl)propane, 2,2-bis(4′-hydroxyphenyl) propane, and hydroquinone. Further, hydroxycarboxylic acids such as ε-hydroxy capronic acid and hydroxybenzoic acid may be copolymerized in an amount of 10 mol% or less of the dicarboxylic acid and diol components. The polyalkylene terephthalate may be branched by trihydric or tetrahydric alcohols or by tribasic or tetrabasic acids. Suitable branching agents are, for example, trimesic acid, trimellitic acid, trimethylolpropane, and pentaerythritol.

Thus the polymer chains are made up primarily of the defined alkylene terephthalate units, but they may contain up to 10% by mol of other monomers described above.

The polyoxyalkylene compound (b) used in the invention is represented by the formula

$$R^1(-OR^2)_l-OR^3)_m.$$

Such polyoxyalkylene compounds are obtained, for example, by esterifying a monofunctional or polyfunctional alcohol which is substantially polyoxyalkylene with a polybasic carboxylic acid anhydride, and then neutralizing it with the hydroxide or alcoholate of an alkali metal. They are also obtained, for example, by reacting a monofunctional or polyfunctional alcohol which is essentially polyoxyalkylene with a monocarboxylic acid containing an alkali metal carboxyl group or its ester-forming derivative.

The alkali metal salt of a carboxylic acid prepared by such a method is shown by the formula

$$-\overset{\overset{\displaystyle O}{\|}}{C}-X(COOM)_n$$

in which X is an aliphatic, alicyclic or aromatic hydrocarbon residue or a halogenated derivative thereof or a mixture thereof, M is an alkali metal and n is an integer of 1 to 5. The most preferred are those compounds in which X is an aromatic hydrocarbon or a halogenated aromatic hydrocarbon residue having 6 to 18 carbon atoms. When an alkaline earth metal is used in place of an alkali metal, the formula should be

$$-(COOM_{1/2})$$

instead of the above.

Examples of suitable polyoxalkylene compounds are the alkali metal salts or alkaline earth metal salts of mono- and di-succinic esters, mono- and di-fumaric esters, mono- and di-phthalic esters, mono- and di-(tetrabromo)phthalic esters and mono- and di-chlorendic esters of polyethyleneglycol, polypropyleneglycol, polytetramethyleneglycol, ethylene oxide — propylene oxide copolymers, and sodium salts of the monotrimellitic ester of monomethoxypolyethyleneglycol. Further, metal salts of mono-, di-, tri-, or tetraphthalic esters and mono-, di-, tri-, or tetra(tetrabromo)phthalic esters of glycerol-alkylene oxide addition products, trimethylolpropane-alkylene oxide addition products and pentaerythrytol-alkylene oxide addition products are also preferable compounds.

The preceding examples are not, however, the only ones which it is possible to use. These exemplifying compounds can also be used singly or in admixtures of two or more. They can also be used together with a polyoxyalkylene itself such as polyethylene glycol, polypropylene glycol or polytetramethylene glycol. The crystallization rate of the polyalkylene terephthalate is remarkably improved by copolymerization and/or mixing a dispersion of such a poloxyalkylene compound having end group(s) of an alkali metal salt or alkaline earth metal salt of a carboxylic acid. This is thought to be due to the improved mobility of the polyalkylene terephthalate chains and to the uniform dispersion of the salt of the carboxylic acid, acting as a nucleating additive, which results from the copolymerization or dispersion mixing of the polyoxyalkylene chains having a lower glass transmission point with the polyalkylene terephthalate in good compatibility. Copolymerization is preferable for attaining uniform dispersion of the polyoxyalkylene compound. Thereby much more improved crystallization characteristics are obtained than in the case of mixing. It is particularly preferable for suppressing lowering of the melting point of the polyalkylene terephthalate to copolymerize a monohydroxy-polyoxyalkylene compound. Polyoxyalkylene compounds such as the sodium salt of (tetrabromo)phthalic ester, having the alkali-metal salt of a carboxylic acid as end group(s) and containing halogen atoms in the organic residues have the effect of improving fire retardance in addition to improving crystallization characteristics. These polyoxyalkylene compounds may contain a small proportion of elements or groups other than oxyalkylene units, such as hydrocarbon residues usually having 1 to 18 carbon atoms and optionally containing halogen, sulfur, oxygen and nitrogen, substituted hydrocarbon, hydrogen, tertiary carbon atoms and the like. Those non-oxyalkylenic units may be residues from methanol, butanol, stearyl alcohol, bisphenol A, bisphenol S and other compounds which are placed in the polymerization system for preparing the polyoxyalkylene. The presence of such elements or groups does not diminish the effect of the alkali metal salt or alkali earth metal salt of the polyoxyalkylene compound. Thus, the term "essentially" here employed means that said compound may contain other elements or groups as shown above. The molecular weight of the polyoxyalkylene compounds is preferably in the range of 200—20,000, most preferably 200—6,000 in view of the compatibility with the polyalkylene terephthalate chains. The polyoxyalkylene compound is used in an amount such that the amount of the metal is 0.001—2.0 parts by weight, preferably 0.1—0.5 parts by weight, of the polyalkylene terephthalate. Below 0.001 parts by weight the crystallization characteristics are hardly improved, and above 2.0 parts by weight the mechanical strength and heat resistance of the

composition are noticeably decreased. According to the present invention, although both alkali metal salt and alkaline earth metal salt can be used alone or in combination, the alkali metal salt can be more advantageously employed when the crystallization characteristics are considered to be significant.

The copolymerization and/or mixing of the polyoxyalkylene compound is performed by simply adding and reacting or mixing it with the polyalkylene terephthalate when the latter is manufactured, by mixing it with the polyalkylene terephthalate using a mixing apparatus such as an extruder, or by effecting condensation polymerization in a molten state after mixing. It is also possible to subject successively the copolymer or mixture to solid phase condensation polymerization.

According to the present invention the mechanical strength, heat resistance and dimensional stability of the composition are increased by blending it with a granular or platy inorganic filler. As granular and platy inorganic fillers may be used, for example, mica, kaolin, clay, talc, asbestos, calcium silicate, calcium sulfate and calcium carbonate, with mica and talc being the most preferable. These may be used singly or in combination of two or more. The amount to be blended is 0—200 parts by weight of the filler per 100 parts by weight of the modified polyalkylene terephthalate; preferably 10—50 parts by weight depending on the desired mechanical strength, heat resistance and fluidity.

Thanks to the present invention it is also possible to improve the heat resistance of the composition under high loads, its mechanical strength at high temperatures and its dimensional accuracy by blending in a fibrous reinforcing agent. The fibrous reinforcing agent used in the invention can be, for example, glass fiber, mineral fiber, carbon fiber, silicon carbide fiber, boron carbide fiber, potassium titanate fiber or gypsum fiber, with glass fiber and mineral fiber being preferable. Fibrous reinforcing agents finished with a silane coupling agent to improve their affinity to modified polyalkylene terephthalate are desirably used. The amount of the fibrous reinforcing agent to be blended is 0—200 parts by weight per 100 parts by weight of the modified polyalkylene terephthalate; preferably 5—150 parts by weight depending on the desired heat resistance, strength, fluidity, etc.

Furthermore, by the invention the fire retardance of the polyalkylene terephthalate composition is improved, if a fire retardant is blended in. Retardants suitably used in the invention include compounds containing an element from group III, IV, V, or VII of the periodic table, and halogen compounds, phosphosphorous compounds, and antimony compounds are the most preferable. These can be used singly or in combination of two or more. Specific examples of the fire retardants are tetrabromobisphenol A or its derivatives, decabromodiphenyl ether, tetrabromophthalic anhydride, perchlorocyclopentadiene derivatives, triphenyl phosphate and antimony trioxide. The amount of blended fire retardant is 0—30 parts by weight per 100 parts by weight of the modified polyalkylene terephthalate.

For blending the granular or platy inorganic filler, fibrous reinforcing agent and fire retardant an alternative method can be used, such as for example, mixing by extrusion together with the modified polyalkylene terephthalate using an extruder, direct injection molding after simply mixing with same or blending with the modified polyalkylene terephthalate when this is manufactured.

The thus obtained compositions are particularly suited to injection molding, but can also be made into moldings by extrusion or other molding methods.

The compositions obtained by means of the present invention reliably give, as will be evident from the following examples, moldings which have remarkably improved crystallization characteristics and moldability by comparison with the moldings from pure polyalkylene terephthalate, excellent mold release characteristics even in short molding cycles, and excellent appearance, mechanical strength, and heat resistance. Particularly, in contrast to pure polyethylene terephthalate, which gives satisfactory moldings only over a long molding cycle and at mold temperatures above 140°C, the polyethylene terephthalate according to the invention gives, in a short molding cycle and at a low mold temperature, moldings with excellent mold release characteristics, appearance, heat resistance and mechanical strength.

The composition according to the invention can be blended with addtives such as plasticizers, lubricants and coloring agents, as well as other known nucleating additives, heat and oxidation stabilizers and light stabilizers. It can also be blended with a small amount of other types of thermoplastic resins or a small proportion of rubber compositions to improve impact resistance.

The composition of the invention can be used to produce a broad range of molded parts, and is particularly suitable for auto parts and electrical parts. It can be used in the form of fibers, films or sheets, as required.

The following examples will further illustrate the invention in detail. In the examples the intrinsic viscosity of the polymer was determined from the logarithmic viscosity measured in phenol/tetrachloroethane mixture (1:1 by weight ratio) at a concentration of 0.5 g/dl and at 25°C. The melting point Tm of the modified polyalkylene terephthalate, cooling crystallization temperature Tc (C) from the molten state, and heating crystallization temperature Tc(H) from the glassy state were measured with the DSC—1B type temperature meter made by the Parkin-Elmer Co. The tensile strength of the moldings was measured according to ASTM—D638, and the heat deflection temperature according to ASTM—D648. The flammability was determined by the method based on the UL94 vertical test method.

Examples 1—5, Control 1

Into a 4l-autoclave equipped with a stirrer were put 1942 g (10 mol) of dimethyl terephthalate, 1366 g (22 mol) of ethylene glycol, and 1.2 g of zinc acetate, an ester interchange catalyst, and heated under stirring for 2 hours at 160—210°C in a nitrogen atmosphere to produce an ester interchange reaction. After the theoretical amount of methanol had been distilled out, each polyoxyalkylene compound (0.1 mol) shown in Table 1, 2.1 g of triphenyl phosphate, a heat stabilizer, and 0.7 g of antimony trioxide, a polycondensation catalyst, were added. Condensation polymerization of the contents was carried out in turn at 270°C and under a pressure below 133 Pa.

The characteristics of the polymers obtained are shown in Table 1.

To the dried chips of each of the above polymers was added 0.5 weight % Ionox 330 (made by Shell Chemical Co.) and these were injection molded at a mold temperature of 90°C in a molding cycle of 25 sec. As a control, polyethylene terephthalate polymer was obtained under the same conditions but without the addition of any polyoxyalkylene compound. It was then molded with the addition of 0.5 weight% Ionox 330 at a mold temperature of 90°C in a molding cycle of 75 sec. The results are shown in Table 1.

TABLE 1

| | | Example | | | | | Control |
|---|---|---|---|---|---|---|---|
| | | 1 | 2 | 3 | 4 | 5 | 1 |
| Polyoxyalkylene compound (Number–average molecular weight) | | Polyethylene glycol mono-phthalate Na (2170) | Polyethylene glycol mono-tri-mellitate 2Na (1740) | Polytetra-methylene glycol mono-succinate K (790) | Polyethylene glycol mono-(tetrabromo)-phthalate Na (1980) | Pentaerythritol-ethylene-oxide addition-di-trimellitate 4Na (4480) | – |
| Intrinsic viscosity | [η] dl/g | 0.70 | 0.65 | 0.75 | 0.65 | 0.72 | 0.69 |
| Melting point Tm | °C | 254 | 254 | 252 | 254 | 251 | 255 |
| Cooling crystallization temperature Tc(C) | °C | 200 | 214 | 202 | 210 | 212 | 187 |
| Heating crystallization temperature Tc(H) | °C | 95 | 92 | 97 | 94 | 92 | 137 |
| Mold release characteristics of moldings | | Good | Good | Good | Good | Good | Poor |
| Appearance of moldings | | Good | Good | Good | Good | Good | Poor |
| Tensile strength | *$kg/cm^2$ | 550 | 520 | 590 | 540 | 560 | 650 |
| Heat deflection temperature (4.7 $kg/cm^2$ load) | °C | 138 | 145 | 132 | 140 | 145 | 85 |

* 1 $kg/cm^2$ = 0,09807 $N/mm^2$

As shown in Table 1, the copolymers according to the invention, by comparison with the single polyethylene terephthalate of the control, have remarkably lower TC(H) of 92—97°C (i.e. virtually adequate crystallizability even at temperatures below 100°C) and elevated Tc(C) (i.e. accelerated nucleation), thus a remarkably increased crystallizable temperature range (Tc(C)—Tc(H)), whilst the melting point of the crystals is hardly lowered. The mold release property and appearance of the moldings according to the invention are good even in the short molding cycle (25 sec) at the mold temperature of 90°C. The moldings of the invention have higher heat deflection temperatures than the single polyethylene terephthalate moldings and virtually adequate mechanical strength. The control, in contrast, could not produce satisfactory moldings in spite of the long molding cycle (75 sec) required. Those moldings having a small quantity of bromine element introduced, as shown in Example 4, revealed self-extinguishing properties.

Example 5

Using pentaerythritol-ethylene oxide addition tri(tetrabromo)phthalate 3Na (0.1 mol) with an average molecular weight of 3040 as the polyoxyalkylene compound, a polymer having an intrinsic viscosity of 0.85 dl/g was obtained in the same manner as in Example 1. To dried chips of this polymer were added 0.5 weight% Ionox 330, an antioxidant, and 3 weight% antimony trioxide, a fire retardant, and this was extruded with an extruder to form pellets for injection molding. Moldings having good mold release properties and excellent appearance were obtained from the pellets by injection molding at a molding temperature of 90°C in the molding cycle of 25 sec. Their tensile strength was 480 $kg/cm^2$ and their heat deflection temperature was 150°C (under a load of 4.7 $kg/cm^2$). The test piece showed excellent self-extinguishing properties.

Examples 6—12, Controls 2—3

Polyethylene terephthalate (intrinsic viscosity: 0.80 dl/g), polybutylene terephthalate (intrinsic viscosity: 1.10 dl/g), polyoxyalkylene compound, mica (Suzorite mica 200 HK, made by Kuraray Co., Ltd.) glass fibers of 3 mm in fiber length (made by Asahi Fiber Glass Co.), and a fire retardant were blended in the proportions shown in Table 2, and extruded with an extruder into kneaded pellets for injection molding. The mold release properties, appearance, tensile strength, and heat deflection temperature of the obtained moldings are shown in Table 2.

As is evident from Table 2, blending of the polyoxyalkylene compound gives moldings having good mold release properties, good appearance, and high heat resistance, even in shortened molding cycles at lower mold temperatures.

The blending of mica, an inorganic filler, and glass fiber, a fibrous reinforcing agent, produces a remarkable increase in the tensile strength and heat resistance and further improvement of the molding properties. By blending in the fire retardant excellent self-extinguishing properties are produced.

TABLE 2

| | | Poly-ethylene tere-phthalate parts | Polybuty-lene tere-phthalate parts | Polyoxyalkylene compound | | Mica parts | Glass fiber parts | Fire retardant | Parts |
|---|---|---|---|---|---|---|---|---|---|
| | | | | (average molecular weight) | parts | | | | |
| Example | 6 | 100 | – | Polyethylene glycol mono-phthalate ½ Ca (3240) | 10 | – | – | – | – |
| | 7 | 100 | – | Polyethylene glycol di-phthalate 2Na (1830) | 10 | – | – | – | – |
| | 8 | 100 | – | Same as above | 10 | 30 | – | – | – |
| | 9 | 100 | – | Same as above | 10 | – | 50 | – | – |
| | 10 | 100 | – | Same as above | 10 | –<br>– | 50<br>50 | Decabromo-diphenyl ether,<br>Antimony trioxide | 10<br>5 |
| | 11 | 100 | – | Polytetra-methylene glycol di-trimellitate 4Na (1120) | 15 | – | – | – | – |
| | 12 | – | 100 | Polyethylene glycol di (tetrabromo) phthalate 2Na (2470) | 10 | – | – | – | – |
| Control | 2 | 100 | – | – | – | – | – | – | – |
| | 3 | – | 100 | – | – | – | – | – | – |

TABLE 2 (Continued)

| | | Mold temperature °C | Molding cycle sec | Mold release properties and appearance | Tensile strength *kg/cm² | Heat deflection temperature (Under 4.7 kg/cm² load) °C | Heat deflection temperature (Under 18.6 kg/cm² load) °C | UL-94 |
|---|---|---|---|---|---|---|---|---|
| Example | 6 | 90 | 25 | Good | 600 | 128 | – | |
| | 7 | 90 | 25 | Good | 540 | 137 | – | |
| | 8 | 90 | 20 | Good | 690 | 212 | 150 | |
| | 9 | 90 | 20 | Good | 1320 | 226 | 224 | |
| | 10 | 90 | 20 | Good | 1200 | 225 | 223 | Self-extinguishing (V-0) |
| | 11 | 90 | 25 | Good | 650 | 130 | – | |
| | 12 | 80 | 16 | Good | 500 | 164 | – | Self-extinguishing (V-2) |
| Control | 2 | 90 | 75 | Poor | 590 | 80 | 65 | |
| | 3 | 80 | 30 | Good | 520 | 154 | – | |

*1 kg/cm² = 0,09807 N/mm².

## Claims

1. Modified polyalkylene terephthalate compositions comprising

(a) 100 parts by weight of a polyester consisting of at least 90 mol% of terephthalic acid and up to 10 mol% of other aromatic dicarboxylic acids having 6 to 14 carbon atoms, aliphatic dicarboxylic acids having 4 to 8 carbon atoms, alicyclic dicarboxylic acids having 8 to 12 carbon atoms or hydroxy carboxylic acids and at least 90 mol% of an alkylene glycol having 2 to 8 carbon atoms and up to 10 mol% of other aliphatic diols having 3 to 10 carbon atoms, alicyclic diols having 6 to 15 carbon atoms or aromatic diols having 6 to 12 carbon atoms, copolymerized and/or mixed with

(b) a polyoxyalkylene compound having the general formula

$$R^1\{(OR^2)_l OR^3\}_m$$

wherein $R^1$ is hydrogen or an organic group of valence m, where m is an integer of 1 to 6, $R^2$ is an aliphatic hydrocarbon group having 2 to 4 carbon atoms, l is zero or a positive integer, $R^3$ is (1) a group containing an alkali metal salt of a carboxylic acid represented by the formula

$$-\overset{\displaystyle O}{\overset{\|}{C}}-X(-COOM)_n$$

in which X is an aliphatic, alicyclic or aromatic hydrocarbon residue or a halogenated derivative thereof or a mixture thereof, M is an alkali metal and n is an integer of 1 to 5, or a corresponding alkaline earth metal salt or (2) a mixture of such groups and hydrogen, in an amount such that the amount of the metal is 0.001 to 2.0 parts by weight of the polyester.

2. Modified polyalkylene terephthalate compositions of claim 1, wherein said polyalkylene terephthalate is a polyethylene terephthalate or a polybutylene terephthalate.

3. Modified polyalkylene terephthalate compositions of claim 1, wherein said polyoxyalkylene compound has a molecular weight of from 200 to 20,000.

4. Modified polyalkylene terephthalate compositions of claim 1, wherein said polyoxyalkylene compound contains at least one alkali metal salt of a carboxylic acid per molecule.

5. Modified polyalkylene terephthalate compositions of claim 4, wherein the amount of the alkali metal is 0.1 to 0.5% by weight of said polyester.

6. Modified polyalkylene terephthalate compositions of claim 1, wherein said polyoxyalkylene compound is a monohydroxypolyoxyalkylene having said metal salt of carboxylic acid at one end of the molecule.

7. Modified polyalkylene terephthalate compositions of claim 1, admixed with a filler.

8. Modified polyalkylene terephthalate compositions of claim 7, wherein said filler is a fire retardant.

9. Modified polyalkylene terephthalate compositions of claim 7, wherein said filler is an inorganic filler.

10. Use of the modified polyalkylene terephthalate compositions according to claims 1 to 9 for the production of shaped articles.

## Patentansprüche

1. Modifizierte Polyalkylenterephthalat-Zusammensetzungen, umfassend

(a) 100 Gewichtsteile eines Polyesters, der aus mindestens 90 Molprozent Terephthalsäure und bis zu 10 Molprozent andere aromatische Dicarbonsäuren mit 6 bis 14 Kohlenstoffatomen, aliphatische Dicarbonsäuren mit 4 bis 8 Kohlenstoffatomen, alicyclische Dicarbonsäuren mit 8 bis 12 Kohlenstoffatomen oder Hydroxycarbonsäuren und mindestens 90 Molprozent eines Alkylenglykols mit 2 bis 8 Kohlenstoffatomen und bis zu 10 Molprozent andere aliphatische Diole mit 3 bis 10 Kohlenstoffatomen, alicyclische Diole mit 6 bis 15 Kohlenstoffatomen oder aromatische Diole mit 6 bis 12 Kohlenstoffatomen besteht,
copolymerisiert und/oder vermischt mit

(b) einer Polyoxyalkylenverbindung der allgemeinen Formel

$$R^1\{(OR^2)_l OR^3\}_m$$

in der $R^1$ Wasserstoff oder ein organischer Rest der Wertigkeit m ist, wobei m eine ganze Zahl mit einem Wert von 1 bis 6 bedeutet, $R^2$ ein aliphatischer Kohlenwasserstoffrest mit 2 bis 4 Kohlenstoffatomen ist, l 0 oder eine positive ganze Zahl bedeutet, $R^3$ (1) einen Rest, der ein Alkalimetallsalz einer Carbonsäure der Formel

$$-\overset{\displaystyle O}{\overset{\|}{C}}-X(-COOM)_n$$

enthält, in der X einen aliphatischen, alicyclischen oder aromatischen Kohlenwasserstoffrest oder ein halogeniertes Derivat davon oder ein Gemisch davon darstellt, M ein Alkalimetall ist und n eine ganze Zahl im Wert von 1 bis 5 bedeutet, oder ein entsprechendes Erdalkalimetallsalz, oder (2) ein Gemisch aus solchen Resten und Wasserstoff ist,
in derartiger Menge, daß die Menge an Metall 0,001 bis 2,0 Gewichtsteile des Polyesters beträgt.

2. Modifizierte Polyalkylenterephthalat-Zusammensetzungen nach Anspruch 1, wobei das Polyalkylenterephthalat ein Polyäthylenterephthalat oder ein Polybutylenterephthalat ist.

3. Modifizierte Polyalkylenterephthalat-Zusammensetzungen nach Anspruch 1, wobei die

Polyoxyalkylenverbindung ein Molekulargewicht von 200 bis 20 000 aufweist.

4. Modifizierte Polyalkylenterephthalat-Zusammensetzungen nach Anspruch 1, wobei die Polyoxyalkylenverbindung mindestens ein Alkalimetallsalz einer Carbonsäure pro Molekül enthält.

5. Modifizierte Polyalkylenterephthalat-Zusammensetzungen nach Anspruch 4, wobei die Menge an Alkalimetall 0,1 bis 0,5 Gewichtsprozent des Polyesters beträgt.

6. Modifizierte Polyalkylenterephthalat-Zusammensetzungen nach Anspruch 1, wobei die Polyoxyalkylenverbindung ein Monohydroxypolyoxyalkylen ist, daß das Metallsalz der Carbonsäure an einem Ende des Moleküls enthält.

7. Modifizierte Polyalkylenterephthalat-Zusammensetzungen nach Anspruch 1, im Gemisch mit einem Füllstoff.

8. Modifizierte Polyalkylenterephthalat-Zusammensetzungen nach Anspruch 7, wobei der Füllstoff ein Flammverzögerer ist.

9. Modifizierte Polyalkylenterephthalat-Zusammensetzungen nach Anspruch 7, wobei der Füllstoff ein anorganischer Füllstoff ist.

10. Verwendung der modifizierten Polyalkylenterephthalat-Zusammensetzungen nach den Ansprüchen 1 bis 9 zur Herstellung von Formkörpern.

**Revendications**

1. Compositions de téréphtalate de polyalkylène modifiées comprenant

(a) 100 parties en poids d'un polyester comprenant au moins 90 moles% d'acide téréphtalique et jusqu'à 10 moles% d'autres acides dicarboxyliques aromatiques possédant 6 à 14 atomes de carbone, d'acides dicarboxyliques aliphatiques possédant 4 à 8 atomes de carbone, d'acides dicarboxyliques cycloaliphatiques possédant 8 à 12 atomes de carbone ou d'acides hydroxy-carboxyliques et au moins 90 moles% d'un alkylène glycol possédant 2 à 8 atomes de carbone et jusqu'à 10 moles% d'autres diols aliphatiques possédant 3 à 10 atomes de carbone, de diols cycloaliphatiques possédant 6 à 15 atomes de carbone ou de diols aromatiques possédant 6 à 12 atomes de carbone,

copolymérisé et/ou mélangé avec

(b) un composé polyoxyalkylène répondant à la formule générale

$$R^1 \text{-}\!(\!-(OR^2\!-\!)_l\!-OR^3)_m$$

dans laquelle $R^1$ est l'hydrogène ou un groupe organique de valence m, dans lequel m est un nombre entier de 1 à 6; $R^2$ est un groupe hydrocarbure aliphatique possédant 2 à 4 atomes de carbone, l est zéro ou un nombre entier positif, $R^3$ est (1) un groupe contenant un sel de métal alcalin d'un acide carboxylique représenté par la formule

$$-\overset{\overset{\displaystyle O}{\|}}{C}-X\!\!-\!\!(COOM)_n$$

dans laquelle X est un reste hydrocarbure aliphatique, cycloaliphatique ou aromatique ou un dérivé halogéné de ce reste ou un mélange des deux, M est un métal alcalin et n est un nombre entier de 1 à 5, ou un sel de métal alcalinoterreux correspondant ou (2) un mélange de tels groupes et de l'hydrogène, dans une proportion telle que la teneur en métal est de 0,001 à 2,0 parties en poids du polyester.

2. Compositions de téréphtalate de polyalkylène modifiées de la revendication 1, dans lesquelles ledit téréphtalate de polyalkylène est un téréphtalate de polyéthylène ou un téréphtalate de polybutylène.

3. Compositions de téréphtalate de polyalkylène modifiées de la revendication 1, dans lesquelles ledit composé polyoxyalkylène a un poids moléculaire de 200 à 20.000.

4. Compositions de téréphtalate de polyalkylène modifiées de la revendication 1, dans lesquelles ledit composé polyoxyalkylène contient au moins un sel de métal alcalin d'un acide carboxylique par molécule.

5. Compositions de téréphtalate de polyalkylène modifiées de la revendication 4, dans lesquelles la quantité du métal alcalin est de 0,1 à 0,5% en poids dudit polyester.

6. Compositions de téréphtalate de polyalkylène modifiées de la revendication 1, dans lesquelles ledit composé polyoxyalkylène est un monohydroxypoloxyalkylène ayant ledit sel métallique d'acide carboxylique à une extrémité de la molécule.

7. Compositions de téréphtalate de polyalkylène modifiées de la revendication 1, mélangées avec une charge.

8. Compositions de téréphtalate de polyalkylène modifiées de la revendication 7 dans lesquelles ladite charge est un retardateur de flamme.

9. Compositions de téréphtalate de polyalkylène modifiées de la revendication 7, dans lesquelles ladite charge est une charge inorganique.

10. Utilisation des compositions de téréphtalate de polyalkylène modifiées selon les revendications 1 à 9 pour la production de produits formés.